# NEUE EUROPÄISCHE PATENTSCHRIFT

(11) **EP 2 738 432 B2**
(45) Veröffentlichungstag und Bekanntmachung des Hinweises auf die Entscheidung über den Einspruch: **26.10.2022**
(45) Hinweis auf die Patenterteilung: 06.06.2018
(21) Anmeldenummer: 13004777.2
(22) Anmeldetag: 04.10.2013
(51) Int. Cl.: F16K 31/00

(54) **Ventilmodul mit elektropneumatischen Ventilen**
Electro-pneumatic valve
Vanne électropneumatique

(30) Priorität: 30.11.2012 DE 102012023532
(43) Veröffentlichungstag der Anmeldung: 04.06.2014
(73) Patentinhaber: ZF CV Systems Hannover GmbH, 30453 Hannover (DE)
(72) Erfinder: Couppee, Ulrich, 31863 Coppenbruegge (DE); Haverkamp, Michael, 30455 Hannover (DE)
(74) Vertreter: Bremer, Ulrich

(56) Entgegenhaltungen:
- EP-A1- 0 538 236
- EP-A1- 1 564 464
- DE-A1- 3 400 645
- DE-A1-102006 020 277
- DE-B4-102020 035 747
- DE-C1- 19 957 959
- DE-C2- 3 400 645
- DE-U1- 20 116 898
- US-A- 6 086 041
- US-A1- 2011 168 929
- US-A1- 2012 161 045
- Trends in automation - das Kundenmagazin von Festo, February 2012 (2012-02),

## Beschreibung

Die Erfindung betrifft ein elektropneumatisches Druckluftsystem eines Nutzfahrzeugs.

Elektropneumatische Ventile werden im Allgemeinen als Solenoid-Ventile mit einer z. B. als Kupferdrahtwicklung ausgebildeten Spule und einem bei Bestromung der Spule verstellbaren Anker ausgebildet. Somit lassen sich durch elektrische Ansteuerung unterschiedliche pneumatische Schaltzustände ausbilden. Die elektropneumatischen Ventile dienen hierbei zum Teil als Vorsteuerventile, um ein nachfolgendes, pneumatisches Relaisventil zur Regelung eines größeren pneumatischen Luftdurchflusses anzusteuern.

Derartige elektromagnetische Ventile weisen eine hohe Temperaturbeständigkeit und Zuverlässigkeit bei Einsatz im Automotivebereich auf. Sie sind jedoch insbesondere aufgrund des Kupfereinsatzes kostspielig; weiterhin erfordern sie einen hohen Bauraum und hohes Gewicht.

Weiterhin sind elektropneumatische Systeme für kleinere Druckluftmengen aus dem Bereich der Industriepneumatik bekannt. Die US 6,086,041 beschreibt ein elektropneumatisches Ventilmodul zum Einsatz in einem Fahrzeugsitz, um Luftpolster in dem Fahrzeugsitz geeignet befüllen zu können. Das Ventil weist eine piezoelektrische Ventilplatte auf, die als Monomorph (mit einer Piezo-Schicht) oder auch Bimorph (mit beidseitig eines Trägermaterials ausgebildeten piezoelektrischen Schichten) ausgebildet sein kann. Das Piezo-Element ist hierbei seitlich bzw. lateral außen eingespannt und weist auf seinen beiden Seiten als Dichtmaterial Ventilscheiben auf, die zwei gegenüberliegende Ventilsitze öffnen und schließen. Das piezoelektrische Element ist im unbestromten Zustand in einer mittleren Stellung, in der beide Ventilsitze freigegeben sind, so dass eine Durchlassstellung erreicht wird. In bestromtem Zustand kann jeweils der eine oder andere Ventilsitz verschlossen werden, indem das piezoelektrische Element entsprechend durchbiegt und somit den Ventilteller gegen den entsprechenden Ventilsitz drückt.

DE 34 00 645 A1 offenbart einen elektrisch-pneumatischen Signalwandler, mit einem piezoelektrischen Biegeelement, das sich beim Anlegen einer elektrischen Spannung biegt und hierbei einen pneumatischen Signalgeber steuert. Das piezoelektrische Biegeelement ist in einem abgeschlossenen Gebergehäuse festgeklemmt und steuert einen Zuluftsitz und einen Abluftsitz, die einander gegenüberliegend in das Gebergehäuse eingesetzt sind. Bei fehlender elektrischer Spannung liegt das piezoelektrische Biegeelement auf dem Zuluftsitz auf, gegen den es vorgespannt ist. Beim Anlegen einer Spannung hebt es sich vom Zuluftsitz ab und verschließt den Abluftsitz. Das jeweilige pneumatische Signal wird an einem Signalausgang abgenommen, der aus dem abgeschlossenen Raum des Gebergehäuses herausgeführt ist.

EP 0 538 236 A1 offenbart ein Piezo-Ventil, wobei die abdichtbare Fläche des Sitzes des steuerbaren Medium-Anschlusses so groß ist, dass die entsprechend dem in der diesen Anschluss geschlossen haltenden Schaltstellung wirkenden Mediumdruck auftretende druckbedingte Schließkraft des Dichtbereiches eines piezoelektrischen Biegeelementes größer ist als die elastisch durch Vorspannung des Biegeelementes bedingte Gegenkraft und kleiner als die Summe dieser Gegenkraft und der beim Anlegen einer entsprechenden Steuerspannung an das Biegeelement wirkenden Piezo-Rückstellkraft. Damit können beide Schaltstellungen des Ventils nach impulsartiger Spannungsbetätigung ohne weitere Spannungsbeaufschlagung des Biegeelementes auch über lange Zeit gehalten werden.

EP 1 564 464 A1 offenbart ein Piezoventil, das einen in einem Ventilgehäuse untergebrachten Biegewandler aufweist, der einen frei endenden, durch elektrische Ansteuerung auslenkbaren Arbeitsabschnitt aufweist. Der Arbeitsabschnitt erstreckt sich über zwei auf der gleichen Seite liegende steuerbare Ventilöffnungen hinweg und besitzt zwei diesen Ventilöffnungen zugeordnete Steuerabschnitte. Eine der Steuerabschnitte dient zur Steuerung einer Zuströmöffnung und wird durch zusätzlich zum Biegewandler vorgesehene Beaufschlagungsmittel ständig in Richtung seiner Schließstellung beaufschlagt. Die Beaufschlagungskraft ist hoch genug, um die Schließstellung zu gewährleisten, wenn der andere Steuerabschnitt die zugeordnete Ventilöffnung freigibt.

Der Erfindung liegt die Aufgabe zugrunde, ein elektropneumatisches Druckluftsystem eines Nutzfahrzeugs zu schaffen, das ein Ventilmodul mit mehreren elektropneumatischen Ventilen aufweist, das eine hohe Zuverlässigkeit und kostengünstige Herstellung ermöglicht.

Diese Aufgabe wird durch ein elektronpneumatisches Druckluftsystem nach Anspruch 1 gelöst. Die Unteransprüche beschreiben bevorzugte Weiterbildungen. Das elektropneumatische Ventil wird mit einer piezoelektrischen Ventilplatte ausgebildet, die durch Anlegen einer elektrischen Steuerspannung verstellbar ist. Hierbei ist eine bimorphe Ausbildung vorgesehen, so dass auf den beiden Seiten eines Trägermaterials eine piezoelektrische Schicht ausgebildet ist.

Vorteilhafterweise ist die piezoelektrische Ventilplatte symmetrisch ausgebildet, dass heißt mit einem Schichtaufbau, der zu beiden Seiten des Trägermaterials gleich oder im wesentlichen gleich ist. somit sind die piezoelektrischen Schichten vorzugsweise gleich ausgebildet und gleich strukturiert, weiterhin vorzugsweise auch die Kontaktierungsschichten, gegebenenfalls auch Dichtungsschichten.

Hierdurch kann bereits eine Temperaturkompensation erreicht werden, so dass bei unterschiedlichen Temperaturbeaufschlagungen die entstehenden Temperaturen, Temperaturspannungen und Temperaturgradienten nicht zu einer einseitigen Verzerrung oder Wölbung des Ventilelementes führen, wie es bei herkömmlichen Ausbildungen, insbesondere Monomorph- Ausbildungen, erfolgen kann.

Das Trägermaterial selbst kann z. B. Metall, Keramik oder piezoelektrisches Material sein.

Die piezoelektrische Ventilplatte verschließt in der Grundstellung ohne Anlegen einer Steuerspannung, d. h. der unbestromten Grundstellung, bereits einen Ventilsitz. Anders in bekannten Systemen, wie der US 6,086,04,1 ist somit zur Ausbildung einer pneumatischen Stellung keine Bestromung erforderlich. Somit kann das elektropneumatische Ventil insbesondere auch in einem elektropneumatischen Luftbeschaffungssystem für das Druckluftsystem eines Nutzfahrzeuges eingesetzt werden, da gegenüber herkömmlichen Ventilausbildungen die elektropneumatischen Schaltpläne nicht grundsätzlich zu ändern sind; bereits in der unbestromten Grundstellung wird eine definierte Position ausgebildet. Der verschlossene Anschluss kann insbesondere einer Entlüftung dienen.

Insbesondere kann das Ventil in seiner Grundstellung einen ersten mit einem dritten Anschluss verbinden, d. h. eine Durchlassstellung oder offene Stellung zwischen zwei Leistungsanschlüssen aufweisen, und bei Bestromung bzw. Anlegen der Steuerspannung einen der Leistungsanschlüsse verschließen und den zur Entlüftung dienenden zweiten Anschluss öffnen.

Indem die mindestens drei Anschlüsse an einen gemeinsamen Innenraum des Ventils angeschlossen sind, kann durch das wechselseitige Verschließen eines von zwei Anschlüssen bereits eine volle Funktionalität mit wechselseitiger Verbindung erreicht werden.

Eine besonders vorteilhafte Ausbildung ergibt sich als 3/2-Wegeventil, wobei in der unbestromten Grundstellung der zur Entlüftung dienende dritte Anschluss verschlossen wird, und die ersten beiden Anschlüsse als Leistungsanschlüsse mit einander verbunden sind. In der bestromten Stellung wird eine Entlüftung einer der beiden angeschlossenen Leitungen, insbesondere der im Luftstromkreis vom Kompressor zu einem Verbraucher hin weisenden Leitungen, ermöglicht.

Somit sind in einem bestromten und einem unbestromten Zustand definierte Stellungen ausgebildet. Obwohl bei einer derartigen Anordnung, bei der die piezoelektrische Ventilplatte bereits in der Grundstellung einen Ventilsitz verschließt, eine Ausbildung als Bimorph grundsätzlich nicht erforderlich wäre und lediglich eine Durchbiegung in eine Richtung erforderlich ist, wird dennoch erfindungsgemäß bewusst eine bimorphe Ausbildung gewählt, um hierdurch eine symmetrische Anordnung der Schichten und vorteilhafterweise eine symmetrische Ausbildung der gesamten piezoelektrischen Ventilplatte zu ermöglichen, um bei Temperaturänderungen und Temperaturgradienten keine ungewollte Verstellung zuzulassen.

Der dritte pneumatische Anschluss, der insbesondere als weiterer Leistungsanschluss dient, ist vorteilhaferweise gegenüber der Symmetrieachse lateral versetzt und wird durch die piezoelektrische Ventilplatte vorteilhafterweise in keiner der Stellungen verschlossen. Somit ist dieser Leistungsanschluss je nach Ventilstellung mit einem der beiden anderen Ventilsitze verbunden.

Neben der vorteilhaften Ausbildung als 3/2-Wegeventil sind auch andere Ausbildungen möglich, insbesondere Ausbildungen mit zwei Stellungen, zum Beispiel als 4/2-Wegeventil zum kreuzweisen Verbinden von vier angeschlossenen Leitungen.

Eine Abdichtung auf den Ventilsitzen wird vorteilhafterweise durch auf der Ventilplatte beiderseitig aufgebrachte Dichtschichten erreicht; diese können lateral durchgängig oder lokal begrenzt sein. Somit können die Ventilsitze frei von Dichtmaterial gehalten werden. Erfindungsgemäss werden mehrere derartige elektropneumatische Ventile von einer gemeinsamen Hochspannungsquelle angesteuert. Somit wird die für die elektrische Ansteuerung erforderliche, im Automotivebereich recht hohe Spannung von zum Beispiel 400 V auf dieses Ventilmodul beschränkt, insbesondere auf einen Ventilblock. Somit sind keine elektrischen Hochspannungsleitungen, die von einer Steuereinrichtung durch zum Beispiel einen Motorraum bzw. in einem Bereich des Fahrzeugs verlaufen, erforderlich.

Die elektrischen Hochspannungsleitungen können vollständig von einem gemeinsamen Schaltungsträger, auf dem die Hochspannungsquelle angeordnet ist, zu den elektropneumatischen Ventilen verlaufen, die ebenfalls an oder auf dem Schaltungsträger befestigt sind. Hierbei kann der Schaltungsträger insbesondere in dem Ventilblock integriert oder an dem Ventilblock angebracht sein, so dass eine gemeinsame Hochspannungsquelle direkt zur Bestromung über Leitungen auf dem Schaltungsträger und im Ventilblock erfolgen kann. Hierbei kann insbesondere auch ein gemeinsamer Ventilblock für die mehreren elektropneumatischen Ventile vorgesehen sein, so dass die elektropneumatischen Ventile in Bohrungen des gemeinsamen Ventilblocks durch angebrachte piezoelektrische Ventilplatten ausgebildet werden.

Somit wird bei einer einfachen und kostengünstigen Herstellung eine hohe Sicherheit insbesondere gegenüber problematischen Hochspannungen und gegenüber temperaturbedingten Verstellungen des Systems erreicht.

Die Erfindung wird im Folgenden anhand der beiliegenden Zeichnungen an einigen Ausführungsformen näher erläutert. Es zeigen:
- Fig. 1: ein elektropneumatisches Ventil als 3/2-Wegeventil gemäß einer Ausführungsform;
- Fig. 2: eine weitere Ausführungsform als 3/2-Wegeventil mit anderer Auslegung der Ventilsitze im Querschnitt;
- Fig. 3: ein erfindungsgemässes Ventilmodul mit mehreren elektromagnetischen Ventilen und gemeinsamer Ansteuerung.

Ein elektropneumatisches Ventil 1 ist als 3/2-Wegeventil mit drei pneumatischen Anschlüssen a1, a2 und a3 ausgebildet. Das elektropneumatische Ventil 1 weist ein vorzugsweise zylinderförmiges Ventilgehäuse 2 auf, dass insbesondere zweiteilig mit einem oberen Gehäuseteil 2a und einem unteren Gehäuseteil 2b, zwischen denen ein mittlerer Innenraum 2c ausgebildet ist. Eine piezoelektrische Ventilplatte 3 ist zwischen den Gehäuseteilen 2a, 2b eingespannt und in dem Innenraum 2c auslenkbar bzw. verstellbar aufgenommen. Die piezoelektrische Ventilplatte 3 erstreckt sich hierbei in einer Ebene senkrecht zur Symmetrieachse A und ist an seinen lateralen (äußeren) Enden zwischen den Gehäuseteilen 2a, 2b eingespannt und/oder in einer zwischen den Gehäuseteilen 2a, 2b aufgenommenen Aufnahme 6 gelagert.

Konzentrisch zur Symmetrieachse A verläuft eine Bohrung 4 durch das Ventilgehäuse 2; der erste pneumatische Anschluss a1 und der zweite pneumatische Anschluss a2 sind an den axial äußeren Enden der Bohrung 4 ausgebildet. Der dritte pneumatische Anschluss a3 ist hierzu lateral versetzt; er kann insbesondere als weitere Bohrung durch ein Gehäuseteil 2b des Ventilgehäuses 2 zu dem Innenraum 2c ausgebildet sein.

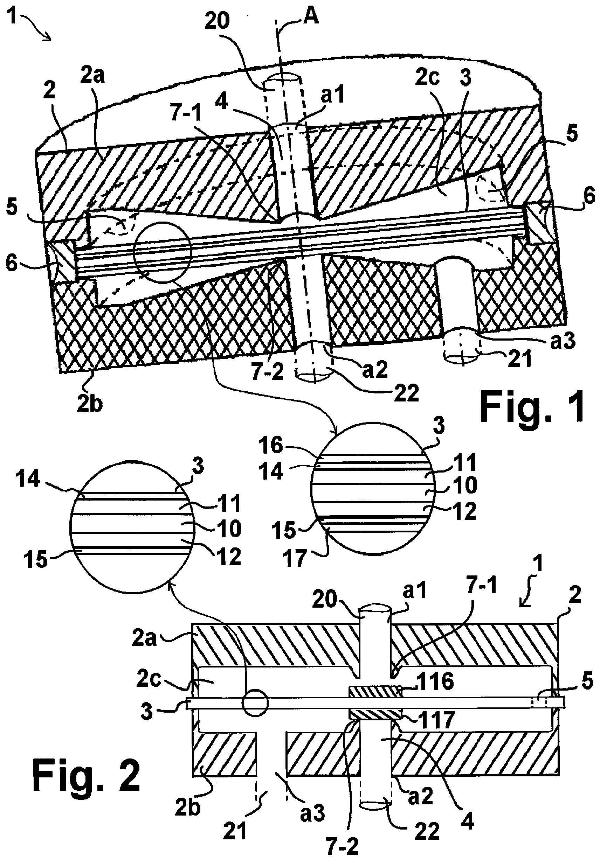

Die piezoelektrische Ventilplatte 3 liegt im Innenraum 2c, ohne diesen pneumatisch zu trennen; hierzu können zum Beispiel in Fig. 1 angedeutete Freiräume 5 in der Piezoelektrischen Ventilplatte 3 ausgebildet sein und/oder Freiräume im Ventilgehäuse 2 lateral versetzt zu der Piezoelektrischen Ventilplatte 3 ausgebildet sein; die Freiräume 5 dienen dazu, die Bereiche des Innenraumes 2c oberhalb und unterhalb der Piezoelektrischen Ventilplatte 3 miteinander pneumatisch zu verbinden.

Das Ventilgehäuse 2 bildet einen ersten Ventilsitz 7-1 für den ersten pneumatischen Anschluss a1 und einen zweiten Ventilsitz 7-2 für den zweiten pneumatischen Anschluss a2. Hierzu kann sich insbesondere der Innenraum 2c zur Symmetrieachse A hin verjüngen, so dass das angrenzende Ventilgehäuse 2 eine Schulter, z. B. einen im Wesentlichen konischen Rand als Ventilsitz 7-1 bzw. 7-2 ausbildet. Grundsätzlich sind jedoch auch andere Ausbildungen möglich.

Die piezoelektrische Ventilplatte 3 ist mehrschichtig aufgebaut; sie ist als bimorphes Piezo-Element ausgebildet und weist auf:
ein Trägermaterial 10 aus Metall, piezoelektrischem Material oder Keramik als mittlere Schicht, eine oberen Piezo-Schicht 11 und eine untere Piezo-Schicht 12 aus jeweils piezoelektrischem, keramischen Material, weiterhin auf den Piezoschichten 11 und 12 aufgebrachte metallische Kontaktierschichten 14, 15, sowie ganz oder bereichsweise aufgebrachte, als Dichtschichten dienenden Gummierungen 16 und 17. Die Gummierungen 16, 17 bzw. Dichtschicht können insbesondere aus einem für Ventilsitze bekannten Dichtmaterial, zum Beispiel einem Kunststoff oder natürlichem oder künstlichem Gummi gebildet sein.

In der gezeigten Grundstellung liegt die piezoelektrische Ventilplatte 3 - ohne Beaufschlagung mit einer oder mehreren Steuerspannungen U - auf dem (hier unteren) zweiten Ventilsitz 7-2 auf; somit liegt die zweite (hier untere) Gummierung 17 dichtend auf dem zweiten Ventilsitz 7-2. Entsprechend ist der obere erste Ventilsitz 7-1 freigegeben, so dass der erste pneumatische Anschluss a1 mit dem Innenraum 2c verbunden ist. Weiterhin ist in sämtlichen Ventilstellungen der dritte Anschluss a3 mit dem Innenraum 2c verbunden, so dass in der gezeigten Grundstellung die beiden Anschlüsse a1 und a3 miteinander pneumatisch verbunden sind. Der erste und dritte Anschluss a1 und a3 dienen hierbei gemäß einer bevorzugten Ausführungsform als Leitungsanschlüsse, um zwei pneumatische Leitungen 20 und 21 (hier nur angedeutet) miteinander zu verbinden.

Bei Anlegen einer oder mehrerer elektrische Steuerspannungen U an die Kontaktierschichten 14, 15 von zum Beispiel 400 V erfolgt eine Betätigung bzw. Verstellung der Piezoelektrischen Ventilplatte 3. Hierzu kann zum Beispiel eine Kontraktion der oberen Piezo-Schicht 11 erreicht werden; so kann zum Beispiel die elektrische Steuerspannung U zwischen der oberen metallischen Kontaktierschicht 14 und dem Trägermaterial 10 angelegt werden, um die Kontraktion der oberen Piezo-Schicht 11 zu erreichen. Weiterhin kann die Steuerspannung U zwischen der unteren metallischen Kontaktierschicht 15 und dem Trägermaterial 10 angelegt werden, um eine Dehnung der unteren Piezo-Schicht 12 zu erreichen. Somit können ein oder mehrere Spannungen angelegt werden; relevant ist die Biegung zum ersten Ventilsitz 7-1 hin, d. h. in Fig. 1 nach oben.

Indem die piezoelektrische Ventilplatte 3 nach oben verstellt wird bzw. sich durchbiegt, gelangt die obere Gummierung 16 gegen den oberen, ersten Ventilsitz 7-1 und sperrt somit den ersten pneumatischen Anschluss a1. Entsprechend ist der untere, zweite pneumatische Anschluss a2 mit dem Innenraum 2c und somit mit dem dritten pneumatischen Anschluss a3 verbunden. Der zweite pneumatische Anschluss a2 kann insbesondere mit einer Entlüftung oder Entlüftungs-Leitung 22 verbunden sein, so dass in dieser betätigten zweiten Ventilstellung der erste Anschluss a1 gesperrt und der zweite Anschluss a2 entlüftet wird. Entsprechend sind auch andere Belegungen der drei Anschlüsse a1, a2 und a3 möglich.

Somit liegt auch ohne Anlegen einer Steuerspannung U, das heißt in einer elektrischen Ruhestellung des elektropneumatischen Ventils 1 eine definierte Ventilstellung unter Sperrung eines Anschlusses vor. Die piezoelektrische Ventilplatte 3 ist hierbei symmetrisch ausgebildet und vorzugsweise auch symmetrisch aufgenommen oder eingespannt. Auch wenn grundsätzlich nicht beide Piezo-Schichten 11 und 12 erforderlich sind, um die gewünschte Verstellung in eine Richtung zu erreichen, so wird durch die symmetrische Ausbildung dennoch der Vorteil einer Temperaturkompensation bzw. eines symmetrischen Verhaltens gegenüber Temperaturschwankungen erreicht.

In der Ausführungsform der Figur 2 sind wiederum die Ventilsitze 7-1 und 7-2 durch eine Formgebung des Ventilgehäuses 2 ausgebildet, bei einem vorzugsweise ansonsten zylindrischen Innenraum 2c. Als Gummierung sind jedoch lokal begrenzte Dichtmaterialbereiche 116 und 117 ausgebildet, so dass eine lateral durchgängige Gummierung nicht erforderlich ist.

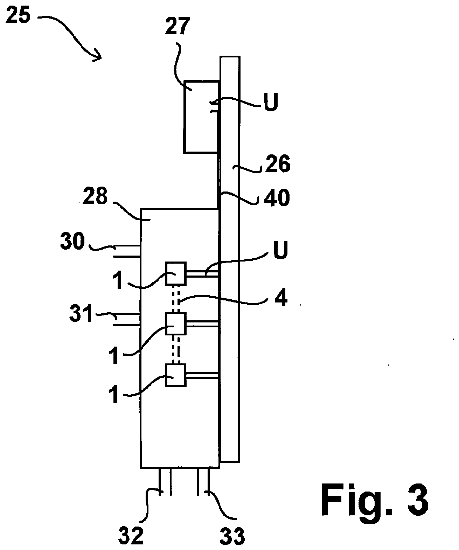

Fig. 3 zeigt ein Ventilmodul 25, das einen gemeinsamen Schaltungsträger 26, zum Beispiel eine Leiterplatte (PCB, printed circuit board), eine auf dem Schaltungsträger 26 montierte Spannungsquelle 27 zum Erzeugen einer Steuerspannung U von zum Beispiel 400 V und einen Ventilblock 28 mit mehreren, hier angedeuteten, elektropneumatischen Ventilen 1 aufweist, die jeweils direkt und unabhängig voneinander von der Spannungsquelle 27 mit Steuerspannungen U beaufschlagt werden können. Hierzu verlaufen elektrische (Hochspannungs-)Leitungen 40 in oder auf dem Schaltungsträger 26, ohne dass entsprechende Hochspannungs-)Leitungen außerhalb verlaufen.

Somit sind die elektropneumatischen Ventile 1 in einem gemeinsamen Ventilblock 28 ausgebildet, der jeweils ein oder mehrere Bohrungen 4 und Innenräume 2c gemäß Fig. 1 oder 2 aufweist. Somit können die Ventile 1 in durchgängigen Bohrungen 4 des Ventilblocks 28 ausgebildet werden, dass somit als Gehäuse 2 der Fig. 1 und 2 dient. Der Ventilblock 28 weist daher mehrere pneumatische Anschlüsse 30, 31, 32, 33 auf. Somit kann ein gemeinsamer Ventilblock 28 und insbesondere eine gemeinsame Spannungsquelle 27 verwendet werden.

## Patentansprüche

1. Elektropneumatisches Druckluftsystem eines Nutzfahrzeugs, das ein Ventilmodul (25) aufweist, wobei das Ventilmodul (25) aufweist:
einen gemeinsamen Schaltungsträger (26),
eine Hochspannungsquelle (27), die auf dem Schaltungsträger (26) montiert ist, und mehrere elektropneumatische Ventile, die durch die gemeinsame Hochspannungsquelle (27) ansteuerbar sind, wobei die elektropneumatischen Ventile aufweisen:
pneumatische Anschlüsse (a1, a2, a3),
ein Ventilgehäuse (2), und
eine piezoelektrische Ventilplatte (3), die eine bimorphe Ausbildung mit Piezo-Schichten (11, 12) aufweist und in Abhängigkeit einer angelegten elektrischen Steuerspannung (U) in Biegestellungen einstellbar ist, in denen sie einen ersten oder einen zweiten Ventilsitz (7-1, 7-2) verschließt,
wobei sie mindestens drei pneumatische Anschlüsse (a1, a2, a3) aufweisen,
wobei die Ventilplatte (3) in einer Grundstellung ohne angelegte Steuerspannung den zweiten Ventilsitz (7-2) verschließt und den ersten Ventilsitz (7-1) freigibt, und bei Anlegen der mindestens einen Steuerspannung (U) in einer betätigten Stellung den ersten Ventilsitz (7-1) verschließt und den zweiten Ventilsitz (7-2) freigibt.

2. Elektropneumatisches Druckluftsystem nach Anspruch 1, **dadurch gekennzeichnet, dass** mehrere elektropneumatische Ventile (1), insbesondere sämtliche elektropneumatischen Ventile (1), in einem gemeinsamen Ventilblock (28) ausgebildet sind, der das Ventilgehäuse (2) der Ventile (1) bildet.

3. Elektropneumatisches Druckluftsystem nach Anspruch 1 oder 2, **dadurch gekennzeichnet, dass** der Schaltungsträger (26) direkt an dem Ventilblock (28) angebracht ist, ohne außerhalb des Schaltungsträgers (26) zu den Ventilen (1) verlaufende elektrische Leitungen.

## Claims

1. Electropneumatic compressed-air system of a utility vehicle, which has a valve module (25), wherein the valve module (25) has:
a common circuit carrier (26),
a high-voltage source (27) which is mounted on the circuit carrier (26), and
a plurality of electropneumatic valves which can be driven by the common high-voltage source (27), wherein the electropneumatic valves have:
pneumatic connections (a1, a2, a3),
a valve housing (2), and
a piezoelectric valve plate (3) which has a bimorph design with piezo layers (11, 12) and, depending on an applied electrical control voltage (U), can be adjusted into bending positions in which it closes a first or a second valve seat (7-1, 7-2),
wherein they have at least three pneumatic connections (a1, a2, a3),
wherein the valve plate (3) closes the second valve seat (7-2) and releases the first valve seat (7-1) in a neutral position without control voltage applied, and closes the first valve seat (7-1) and releases the second valve seat (7-2) in an operating position when the at least one control voltage (U) is applied.

2. Electropneumatic compressed-air system according to Claim 1, **characterized in that** a plurality of electropneumatic valves (1), in particular all of the electropneumatic valves (1), are formed in a common valve block (28) which forms the valve housing (2) of the valves (1).

3. Electropneumatic compressed-air system according to Claim 1 or 2, **characterized in that** the circuit carrier (26) is fitted directly to the valve block (28), without electrical lines running to the valves (1) outside the circuit carrier (26).

## Revendications

1. Système à air comprimé électropneumatique d'un véhicule utilitaire, qui présente un module de soupape (25), le module de soupape (25) présentant :
un support de circuit commun (26),
une source de haute tension (27), qui est montée sur le support de circuit (26), et
plusieurs soupapes électropneumatiques qui peuvent être commandées par la source de haute tension commune (27), les soupapes électropneumatiques présentant :
des raccords pneumatiques (a1, a2, a3),
un boîtier de soupape (2) et
une plaque de soupape piézoélectrique (3) qui présente une réalisation bimorphe avec des couches piézoélectriques (11, 12), et qui peut être ajustée en fonction d'une tension de commande électrique appliquée (U) dans des positions de flexion dans lesquelles elle ferme un premier ou un deuxième siège de soupape (7-1, 7-2),
celles-ci présentant au moins trois raccords pneumatiques (a1, a2, a3),
la plaque de soupape (3), dans une position de base sans tension de commande appliquée, fermant le deuxième siège de soupape (7-2) et ouvrant le premier siège de soupape (7-1), et lors de l'application de l'au moins une tension de commande (U), dans une position actionnée, fermant le premier siège de soupape (7-1) et libérant le deuxième siège de soupape (7-2).

2. Système à air comprimé électropneumatique selon la revendication 1, **caractérisé en ce que** plusieurs soupapes électropneumatiques (1), en particulier la totalité des soupapes électropneumatiques (1), sont réalisées dans un bloc-soupape commun (28) qui forme le boîtier de soupape (2) des soupapes (1) .

3. Système à air comprimé électropneumatique selon la revendication 1 ou 2, **caractérisé en ce que** le support de circuit (26) est monté directement sur le bloc-soupape (28), sans conduites électriques s'étendant en dehors du support de circuit (26) vers les soupapes (1).
